# EUROPEAN PATENT APPLICATION

(11) **EP 1 941 939 A1**
(43) Date of publication of application: **09.07.2008**
(21) Application number: 06775440.8
(22) Date of filing: 21.08.2006
(51) Int. Cl.: B01D 47/06

(54) **A WATER-SPRAYING AIR PURIFYING APPARATUS AND THE PURIFYING PROCESS THEREOF**

(30) Priority: 23.08.2005 CN 200510092870
(71) Applicant: Li, Jingang, HongKong Road, Qingdao Shandong 266000 (CN)
(72) Inventor: Li, Jingang, HongKong Road, Qingdao Shandong 266000 (CN)
(74) Representative: Plougmann & Vingtoft A/S
(86) International application number: PCT/CN2006/002122
(87) International publication number: WO 2007/022703

(57) **Abstract**

A water-spraying air purifying apparatus includes an air inlet segment, an air purifying segment and an air outlet segment. An air cleaner is mounted at the forepart of the air purifying segment to purify the inlet air preliminarily, which includes one or more spraying equipments, a dust container, a washing liquid box and a pump. The dust container located below the spraying equipments has a hole on top and a filtering screen at the bottom to communicate with the washing liquid box. The pump is used for pumping the washing liquid in the washing liquid box to the spraying equipments to recirculate. The air to be purified passes the washing liquid spraying curtain zone firstly, wherein most of the germina, dusts and solid particulates are removed by the sprayed washing liquid. The preliminarily cleaned air is further purified and sent back to the room, and the washing liquid that absorbs dust and germina in the air is filtered and flows back to the washing liquid box so as to be pumped into the spraying tube again for recirculating.

## Description

### Technical Field

The present invention relates to air purification technology. Specifically, the present invention relates to an air purifying apparatus for removing dust and bacteria, and an air-purifying method by using the apparatus.

### Background Art

Air is one of the essential external environment conditions for the survival of human being, however, most of current buildings, considering the increase of energy efficiency, are closed building structure, which remarkably reduces the refreshment rate of indoor air and worsens the quality of indoor air.

The indoor air is also contaminated because of harmful gases such as formaldehyde, benzene and ammonia etc. remained over after house decoration; pet-breeding; abnormal flavour produced by smoking, drinking and daily living of human being; pollen produced by plant; fungus and so on. Therefore, it is particularly important for the health of human to create a living environment which is clean, comfortable and free of bacterium.

In recent years, some air purifiers are developed to improve the quality of indoor air, and these traditional air purifiers are classified into three main modes basing on their purifying mechanism:

### 1. Mechanical filtering mode

There used the fiber or foam containing chemical material and high-density material and usually includes two layers of active carbon and high-efficiency fiber. This mode of air purifier has some shortcomings as follows: the filtering layer is often blocked up to cause airflow resistance increase, and the dust will deposit and bacteria will grow after being used for a period of time, which will create the secondary pollution to the indoor air.

### 2. Electronic dust collection mode

Dust particles is provided with charges by high voltage and the foul air is driven to pass through the electrode collecting board and subject to positive and negative absorption to achieve purification, however, the collecting board needs to be cleaned periodically to restore the purification efficiency.

### 3. Negative ion neutralization mode

Negative ions are produced by using the high voltage needle and blown out by means of the electric motor (without motors in some cases) to neutralize the dust charged positively. After the increase of the weight, the dust falls down to the ground to achieve purification. However, environment all around is contaminated because the dust is not absorbed, therefore, this mode of purifying method has gradually been out of use.

At present, air-conditioning system of blower coil plus fresh air is used to adjust the indoor temperature in operating rooms (sterile rooms) of most hospitals, but the dust can not be removed effectively. Some air-conditioning apparatus have been upgraded simply and the filter screen is installed at the air outlet of the conditioner, however, the airflow resistance increases and air discharge decreases, because of short length of air outlet, which will reduce the efficiency and destroy the air-flow organization. The dust from indoor air accumulates in the air conditioner constantly because the airflow is inhibited, so that the air conditioners become another urban pollution.

Clean air conditioner is used in some high-class operating rooms and sterile rooms and it operates by using the full wind system, however, its installation is inconvenient and airflow resistance increases because of multiple stage of filter. Moreover, the bacteria multiply rapidly because of dust deposit and suitable temperature, which causes a severe pollution to the indoor air and increases the probability of disease and wound infection. Meanwhile, the harmful bacteria spread among all rooms along with the air flow, which further increases the possibility of disease infection in the hospital.

In a word, although the traditional air purifier has some effect on improving the air quality in the early days use, however, filter element has to be changed regularly due to its structure reason, which causes much inconvenience and economic burden. In addition, the multistage filter element used causes the increase of airflow resistance and results in gas flow obstruction, dust deposit and bacterial growth, which may creates the secondary pollution to the indoor air.

Similarly, in some purifying methods of prior art, the multistage filtration used results in the secondary pollution to the indoor air. Although, adding active carbon improves the purification effect to some extent, it also causes the secondary pollution to the indoor air. Some methods for purifying the air by means of negative ions will contaminate the items all around and make them black due to a mass of dust fall. The method for purifying the air by using ozone may oxidize the indoor metal and rubber items, etc, and people have to be separated from the machine., The prior art purifying methods have one or more problems mentioned above, therefore, those methods can't meet the requirements for air purification.

### Disclosure of the Invention

Accordingly, it is an object of the invention to provide an air purifying apparatus and an air purifying method by using the apparatus, which can purify the air more effectively without creating the secondary pollution to the indoor air.

In order to accomplish the purpose above mentioned, the present invention provides a water-spray air purifying apparatus comprising air-in section, air-purification section with some air purifying means positioned therein and air-out section, characterized by, an air cleaner is positioned at the front end of the air purification section for carrying out the preliminary purification to the introduced air; the air cleaner comprises one or more spray means, a dust container, a cleaning solution tank and a water pump; the dust container, which has an opening at the top and a filter screen positioned at the bottom, is installed below the spray means and is connected to the cleaning solution tank; the water pump is used for pumping the cleaning solution from the cleaning solution tank into the spray means for recycle.

Furthermore, in a preferred example of air purifying apparatus according to the invention, the air cleaner comprises further the combination unit of ozone generator and air pump whose outlet is connected to the cleaning solution tank below the liquid level through pipe; the cleaning solution tank is closed and fitted with a gas-water mixer; the aqueous ozone solution produced by pumping ozone into the closed cleaning solution tank is used as the cleaning solution.

Furthermore, in another preferred example of the air purifying apparatus according to the invention, the air purifying means comprises further a negative ion generator installed near the airflow passage in the air-out section.

Furthermore, in another preferred example of the air purifying apparatus according to the invention, one or more purifying means selected from the group consisting of photocatalyst screen, electronic catalytic sterilizer, high efficiency filter, sub-efficient filter and removable filter screen is/are installed in air-purification section.

Furthermore, in another preferred example of the air purifying apparatus according to the invention, the spray means comprises a spout over the dust container and the spout has some orifices downward and in lines with a lot of orifices on a line.

Furthermore, in another preferred example of the air purifying apparatus according to the invention, the orifices in the spray means are arranged in lines, and orifices on the two adjacent lines are staggered each other in the direction of line with 30-500 orifices on a line.

The water-spray air purifying method according to the invention comprises the steps of:

The air to be purified is introduced into the air purifying apparatus through the air inlet, followed by passing through a curtain formed from sprayed cleaning solution with most of harmful bacteria, dust and solid particles washed off by the sprayed cleaning solution;

The air after the preliminary purification above mentioned is subject to the subsequent purification, followed by sent back to the room space;

Meanwhile, the cleaning solution with adsorbed dust and bacteria from the air stream is filtrated, followed by returning to the cleaning solution tank and pumped again into the spout for recycle.

Furthermore, in a preferred example of the air purifying method according to the invention, after the preliminary purification, the air is subject to one or more of the following purification treatments:
A. Exposed to the ultraviolet compound light and passing through Ni-Ti-Al based photocatalyst screen and electronic catalytic sterilizer to sterilize, decompose harmful gases and eliminate abnormal flavor;
B. Adding the negative ions to refresh the air;
C. Passing through the removable and washable filter screen, high efficiency filter or sub-efficient filter for sterilization and filtration;

Furthermore, in another preferred example of the air purifying method according to the invention, the aqueous ozone solution is used as the cleaning solution, which is produced by pumping the ozone from the ozone generator into the closed cleaning solution tank and mixing the gas with water so that the cleaning solution is further sterilized and the oxygenolysis of the remains of the killed bacteria and dust is carried out.

Furthermore, in another preferred example of the air purifying method according to the invention, the antiseptic solution is used as the cleaning solution in order to wash dust off, kill bacteria and break down the remains thereof.

From the above mentioned, it is understood that the air to be purified is subject to preliminary purification by using the air cleaner to remove bacteria and dust in the air so that the filter screen is not blocked up very often and the filter element need not to be changed frequently, as a result, the secondary pollution to the indoor air is avoided. In addition, it is not necessary to practice the multiple-stage filtration so that the trouble of high airflow resistance is dismissed. Furthermore, in present invention, various purifying means can be used to eliminate abnormal flavor, remove harmful gases, increase oxygen and negative oxygen ions in the indoor air and prevent bacteria from transmission, etc. In present invention, the filter screen in the air cleaner can be washed up automatically so that the air purifying apparatus will operate for a long period of time without changing the filter element.

### Brief Description of the Drawing

Figs. 1A and 1B are respectively a front view and a side view partially in section of the air purifying apparatus with a transverse spout in an example of the invention;
Fig. 2 is the structural schematic of the air purifying apparatus with a transverse spout in Fig.1A and 1B;
Fig. 3 is the structural schematic of the air purifying apparatus for sterile room in an example of the invention;
Fig. 4 is the structural schematic of the air purifying apparatus for the house of domestic animal or bird in an example of the invention;
Fig. 5 is the structural schematic of the air purifying and sterilizing apparatus in an example of the invention;
Fig. 6 is the structural schematic of the air purifying apparatus for the room space with oil mist in an example of the invention;
Fig. 7 is the structural schematic of the air purifying apparatus for food-processing room in an example of the invention;
Fig. 8 is the structural schematic of the central air conditioning and purifying apparatus in an example of the invention;

### Best Mode for Carrying Out the Invention

The best mode for carrying out the invention will be described in detail referring to attached drawings, in which the same reference characters denote the corresponding components.

### Example 1

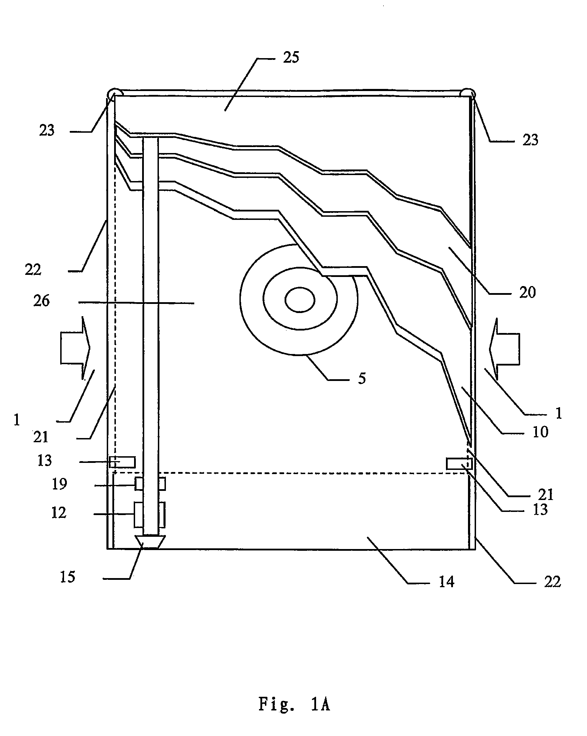

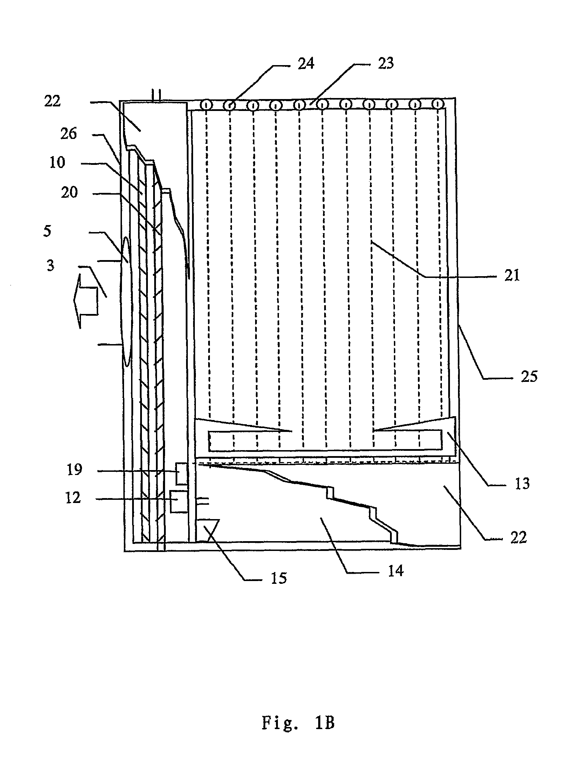

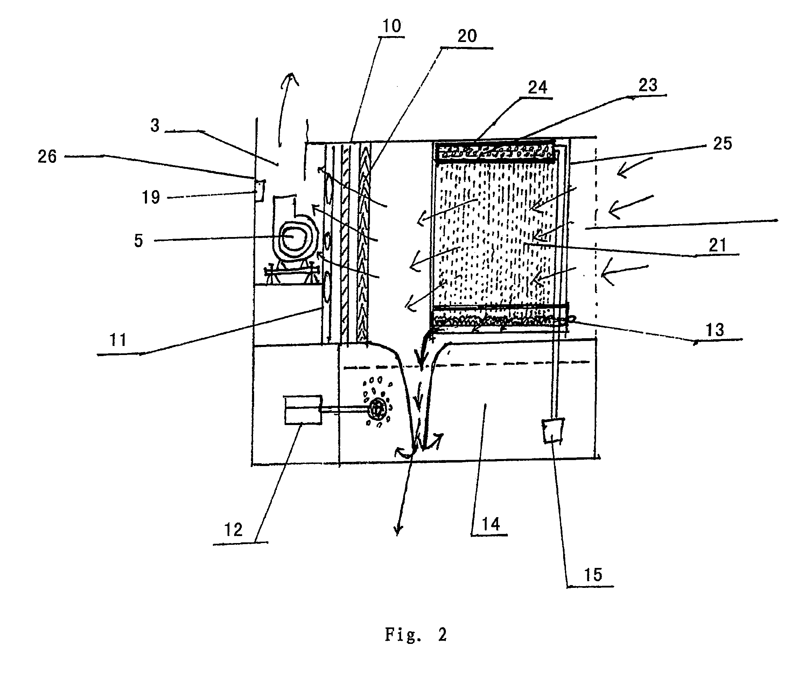

Figs.1a and 1b are respectively a front view and a side view of partially in section of the air purifying apparatus with a transverse spout in this example of the invention; Fig.2 is the schematic illustration of purification process by using the air purifying apparatus. As shown in the figures, the air-flow path in the air purifying apparatus with a transverse spout is divided into air-in section, air-purification section and air-out section, with some air blowers and various purifying means equipped in the apparatus. The air-in section comprises an inlet 1 for drawing the air and the air-out section comprises an outlet 3 for blowing the air out. Blower 5 is used for drawing the air to be purified through inlet 1 into the air-in section, passing it through the air-purifying section for the purification, finally discharging the purified air through the outlet 3 at the end of the air-out section. Although, blower 5 is located on the rear apron 26 in this example, it can be installed at the top or on the side or at any other proper position of the purifying apparatus. The blower 5 can be one or more, depending on the specific application.

The purifying means installed in the air-purification section comprise the air cleaner at the front end of the section, negative ion generator 19, photocatalyst screen 10 and removable filter screen 20. The air is subject to preliminary purification by means of the air cleaner, followed by passing through other subsequent purification means.

The air cleaner comprises spray means, dust container 13, cleaning solution tank 14, water pump 15 and the combination unit 12 consisting of ozone generator and gas pump.

In this example, as shown in the figures, the spray means comprises a spout 23 with a lot of orifices 24 in alignment. Spout 23 is positioned over the air-flow path at the front end of the air-purification section so as to form a water-sprayed curtain 21 across the air-flow path. The spray means comprises a spout 23 having plurality of orifices downward and the orifices are arranged in lines of 1-30 (six lines in this example) with 30-500 orifices on a line ( 90 orifices in this example ). The orifices on two adjacent lines are staggered each other in the direction of line and the water is sprayed downward to form a plurality of water-sprayed curtain.

Dust container 13 is below the spraying means and over the cleaning solution tank 14, and is open at its top for the cleaning solution containing dust and solid particles to enter. The dust container 13 has the filter screen positioned at its bottom and is connected to cleaning solution tank 14.

The inlet of water pump 15 is inserted into the cleaning solution in the cleaning solution tank and its outlet is connected to spout 23 of the spray means.

In addition, the air cleaner also includes combination unit 12 consisting of an ozone generator and an air pump, which is installed at any positions, preferably on the outer wall of cleaning solution bank 14. The combination unit 12 is connected to the cleaning solution tank through a PVC pipe and below the liquid level. The ozone from the ozone generator is pumped into the closed cleaning solution tank and dissolved in the water by way of the gas-water mixer, such as bubble chamber, gas-water mixer, bubbler tube and jet-flow unit, etc. to produce the aqueous ozone solution of above 0.2-0.3 mg/L as the cleaning solution after 20 minutes. The ozone gets in touch with water for a period of about 10 min.

The cleaning solution tank is closed and connected to other units through pipes to avoid the harmful effect on environment in this example. Ozone, as the predominant component for purification, antibacterial and disinfection, is dissolvable in water and is used for killing the bacteria in the cleaning solution tank and subjecting the killed bacteria and dust to oxygenolysis by means of its unique characteristics so that purified particulate matter is discharged to the filter screen between cleaning solution tank and dust container, as a result, the pollutant is removed automatically. The bacteria are killed thoroughly and the air is purified completely by synergism of both effects above mentioned. As cleaning solution, the aqueous ozone solution is very effective on sterilization and its sterilizing rate is about 99.999%, so that sterilizing is completed faster and more reliable than chlorination. The ozone kills out the bacteria mainly by destroying its protein coat. Ozone has great effect on killing colon bacillus and streptococcus faecalis, etc.

The air cleaner acts as the first barrier for the purification, sterilization and disinfection by washing the bacteria and dust in air into the solution in the cleaning solution tank to remove these contaminants. As a result, repeated sterilization and purification can be carried out with cleaning the air, removing dust and discharging contaminant automatically.

As a major unit for purification, antibacterial and disinfection, photocatalyst screen 10 comprises ultraviolet compound light and Ni-Ti-Al based photocatalyst screen (the same below). The unit is a photochemical catalyst system of N-type semiconductor, which has catalystic effect when exposed to light. Photocatalyst screen 10 absorbs the ultraviolet rays (310-380nm) and emits electrons and electron beams when exposed to ultraviolet compound light to subject the organic substances to oxygenolysis into water and carbon dioxide. Taking advantage of this mechanism, the contaminant from ambient air and organic pollutant in water are decomposed into water and carbon dioxide. In a similar way, the bacteria are subject to oxygenolysis and the DNA and RNA of microorganism produce photochemical reaction to form pyrimidine dimer so that those microorganisms lose its vitality. The Ni-Ti-Al based photocatalyst screen as photochemical catalyst is resistant to acid and alkali and harmless to human body.

There is an electronic-catalytic sterilizer 11 installed near the photocatalyst screen, which can be the photocatalyst germicidal lamp used for killing the bacteria and virus in the air passing through the system. The photocatalyst screen and electronic-catalytic sterilizer are combined together, which is favorable for maximizing the purification effect.

The removable filter screen 20 is an optional unit, which is used for secondary filtration to improve the filtration effect. Removal of the removable filter screen 20 can reduce airflow resistance and make purification fast

The negative ion generator 19 is positioned near air-flow passage in the air-out section so that negative ions are easily brought into the room space. The negative ions have very strong oxidizing effect and react with hydrocarbon chain in viral capsid or on bacterial surface so that bacteria or virus fall off the attached surface. The strong oxidization of negative ions can also create oxygenolysis to harmful gases and a mass of oxygen releases so as to further kill bacteria, eliminate abnormal flavour and remove harmful gases.

In this example, the air purifying process comprises steps of:

The air to be purified is introduced into the purification apparatus through the air inlet, followed by passing through a curtain formed from sprayed cleaning solution such as water. Cleaning solution sprayed to form the curtain can effectively adsorb the dust and bacteria suspended in the air and wash them off. Most of bacteria, dust and solid particles are washed off by the sprayed cleaning solution and the air purified preliminarily is exposed to ultraviolet compound light and driven to pass through Ni-Ti-A1 based photocatalyst screen so that bacteria are killed, harmful gases are decomposed and abnormal flavour is eliminated. In addition, the negative ions are added to refresh the air and make it clean, fresh and aseptic, after that, the air is sent back to the aseptic workroom.

Meanwhile, the cleaning solution with adsorbed dust and bacteria is filtered and the filtered solution flows back to the cleaning solution tank for recycle by pumped into the spout. In this example, the cleaning solution is the aqueous ozone solution formed by mixing ozone with water, which can carry out the further sterilization to the bacteria and dust in the cleaning solution tank and subject the remnant of the killed bacteria and dust to oxygenolysis. Cleaning and pollution discharge are carried out automatically. The bacteria are killed thoroughly and the air is purified completely by synergism of both effects above mentioned.

### Example 2

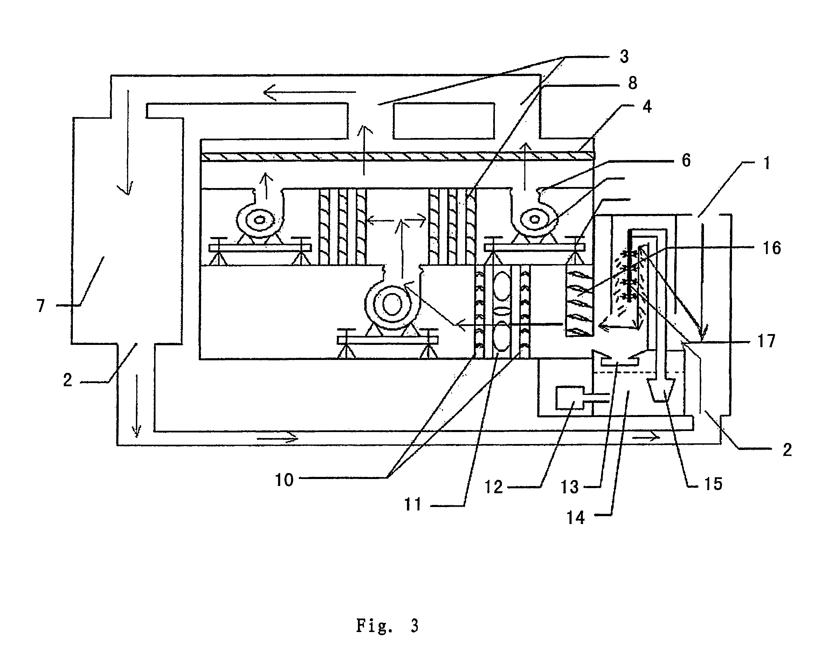

Fig. 3 is the schematic illustration of the purification process by using the air purification apparatus for the sterile room in this example. The same reference characters as those in the figures above mentioned denote the corresponding components. In this example, as shown in the Fig. 3, the air-flow path of the air purification apparatus for the sterile room also includes air-in section, air-purification section and air-out section. There are two air inlets positioned in the air-in section, which are inlet 1 for ambient air and inlet 2 for recycled air. The air to be purified is drawn into the purification apparatus through the two inlets. There are three blowers 5, which are installed on the different positions in the purification apparatus respectively.

In this example, an air cleaner is installed at the front end of the air-purification section, which has same components and structure as that in the example 2. There are also photocatalyst screen 10, electronic-catalytic sterilizer 11, high efficiency filter 8 and sub-efficient filter 4 installed in the air-purification section. Moreover, in this example, a surface cooler 16 is installed in the air-flow path of the air purification section, preferably subsequent to the air cleaner. The surface cooler 16 is the heat exchanger of air conditioner for heating in winter and refrigerating in summer.

The purification method in this example is basically same as that in the example 1 and comprises the preliminary purification to the air by water-washing filtration. The differences between them are as follows:
1) The cleaning solution used in this example is disinfectant, such as biologic enzyme bacteriolytic agent, formaldehyde antiseptic bath or chlorine-water antiseptic bath, which are used to wash dust off, kill harmful bacteria and break them down. Likewise, sterilization and purification can be repeated twice with cleaning the air, removing dust and discharging contaminant automatically.
2) In this example, the air purified preliminarily also needs to be cooled and the purification means through which the air passes include electronic-catalytic sterilizer, high-efficiency filter and sub-efficient filter besides photocatalyst screen. The air is repeatedly filtered and sterilized layer by layer to become clean, fresh and aseptic, and finally introduced to the sterile room. The arrows in the figure indicate the direction of the air flow.

### Example 3

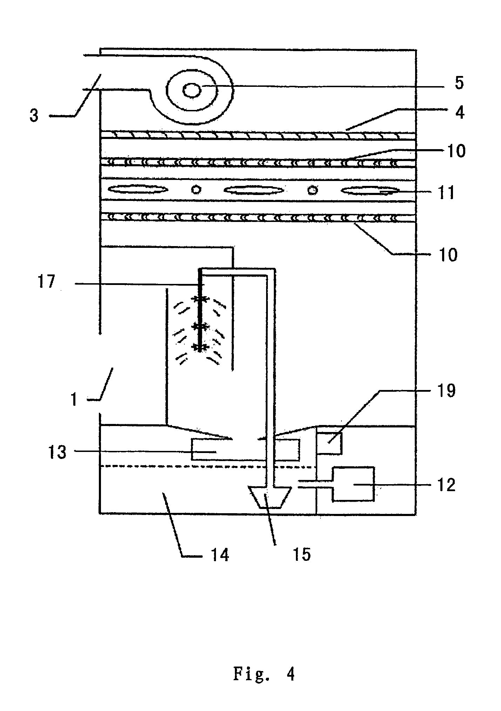

Fig.4 is the schematic illustration of the purification process by using the air purifying apparatus for the house of domestic animal or bird in this example. As shown in fig.4, the air-flow path in the apparatus can also be divided into air-in section, air-purification section and air-out section. The air to be purified is drawn from the house for domestic animal or bird into the purification apparatus through inlet 1 by blower 5 positioned at the top of the apparatus. The foul air is purified partly by air cleaner and, then, is subject to sterilizing and filtering by photocatalyst screen 10, electronic catalytic sterilizer 11 and sub-efficient filter 4 to become fresh and aseptic. The fresh and aseptic air is discharged to the space in the house for domestic animal or bird through outlet 3 by the blower. In addition, in this example, the negative ion generator is installed on the side wall of cleaning solution tank and its outlet is above the fluid level.

### Example 4

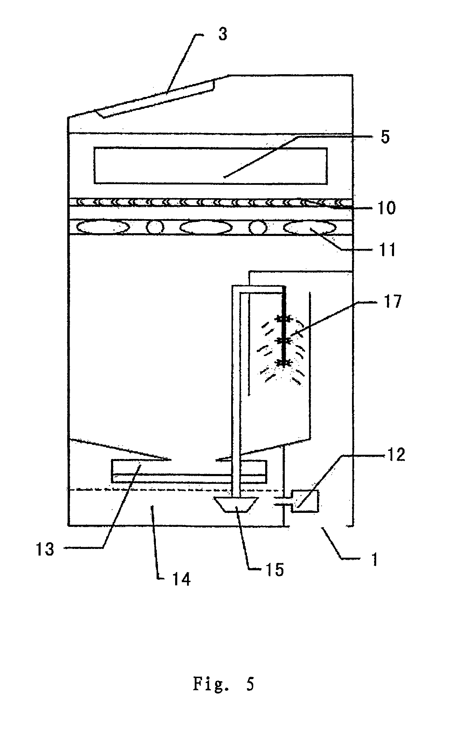

Fig. 5 is the schematic illustration of the purification process by using the air purifying and sterilizing apparatus in this example. Air-flow path in the apparatus can also be divided into air-in section, air-purification section and air-out section. The air to be purified is drawn into the purification apparatus through inlet 1 by blower 5 positioned at the top of the apparatus. The foul air is purified partly by air cleaner, followed by subjecting to sterilization and filtration upon passing through photocatalyst screen 10 and electronic-catalytic sterilizer 11 to become clean, fresh and aseptic. The fresh and aseptic air is discharged to the room space through outlet 3 by the blower.

### Example 5

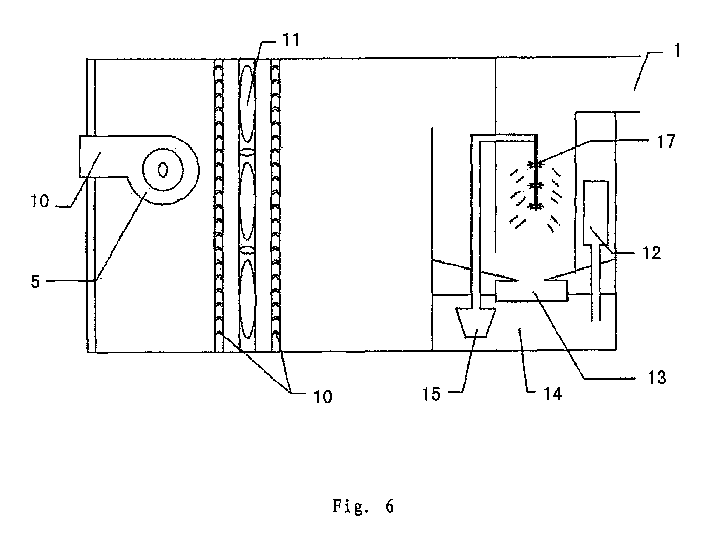

Fig. 6 is the schematic illustration of the purification process by using the air purifying apparatus for the room space with oil mist in this example. The air-flow path in the apparatus is also divided into air-in section, air-purification section and air-out section. The foul air containing oil mist is drawn into the purification apparatus from kitchen through inlet 1 by blower 5 positioned on left side. The foul air is purified partly by air cleaner, followed by subjecting to sterilization and filtration upon passing through photocatalyst screen 10 and electronic-catalytic sterilizer 11 to become clean, fresh and aseptic. The fresh and aseptic air is discharged to the room space through outlet 18 by the blower.

### Example 6

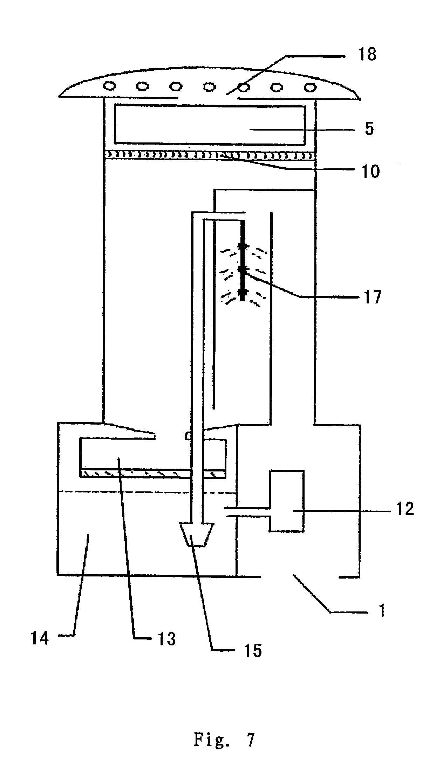

Fig. 7 is the schematic illustration of the purification process by using the air purifying apparatus for food processing plant in this example. The air-flow path in the apparatus is also divided into air-in section, air-purification section and air-out section. The air to be sterilized is drawn into the purification apparatus from food processing room through inlet 1 by blower 5 positioned at the top of the apparatus. The foul air is purified partly by air cleaner, followed by subjecting to sterilization and filtration upon passing through photocatalyst screen 10 to become clean, fresh and aseptic. The fresh and aseptic air is discharged to the room space through outlet 18 by the blower.

### Example 7

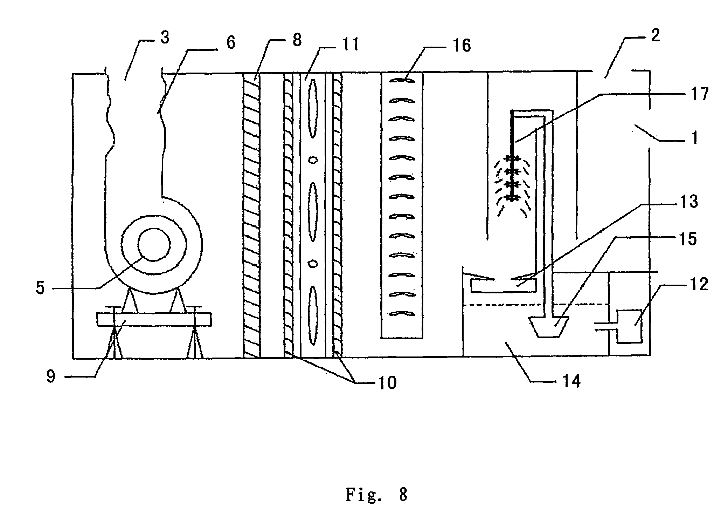

Fig. 8 is the schematic illustration of the purification process by using the central air conditioning and purifying apparatus of present example. The air-flow path in the apparatus is also divided into air-in section, air-purification section and air-out section. The air to be sterilized is drawn into the purification apparatus from work room through inlet 1 or 2 by blower 5 positioned on left side. The foul air is purified preliminaryly by air cleaner and cooled by surface cooler 16, followed by subjecting to sterilization and filtration upon passing through photocatalyst screen 10, electronic-catalytic sterilizer 11 and high efficiency filter 8 to become clean, fresh and aseptic. The fresh and aseptic air is discharged to the room space through outlet 3 by the blower.

In brief, the present invention has the following merits in comparison to the air purifying apparatus and method in prior art:
1. The spray means is used and cleaning solution is sprayed under control to form a water-sprayed curtain so that the dust and bacteria in air are adsorbed and washed effectually; In addition, there is a filter screen installed at the bottom of the dust container, which is used for filtering particulate matter and recycling the cleaning solution, so that the dust and bacteria are washed off and the filter screen is cleaned automatically. The dust removal will operate constantly without blockage and resources can be saved;
2. The disinfectant or aqueous ozone solution, which is produced by pumping ozone into the water in a closed tank, is used as the cleaning solution to further kill the bacteria in the cleaning solution tank;
3. The negative ion generator can be installed below the spray means and above the clean solution level, which makes the cleaning solution rich in negative ions in order to further kill bacteria, eliminate abnormal flavor, remove harmful gases and increase oxygen in the air ;
4. The ultraviolet compound light, Ni-Ti-Al based photocatalyst screen and electronic catalytic sterilizer can be installed in the air purifying apparatus to carry out oxygenolysis of pollutant and bacteria in air and water and to further purify the air.
5. The filter can also be installed in the air purifying apparatus to purify the air layer by layer.

The purification apparatus according to the invention can be used for: removing the abnormal flavor caused by formaldehyde, toluene, ammonia, smoking, drinking and human body in everyday life; killing the harmful bacteria and virus in the air to prevent effectively various diseases from transmission by way of air; increasing oxygen and negative oxygen ion in the air which are good for human physically and mentally. The purification apparatus equipped with surface cooler can be used for both refrigerating and heating with multiple energy sources and high efficiency and can be used for purifying the air solely.

It is to be understood that the present invention is not limited to the applications described above, but can be applied to various circumstances where the air is required to be purified. In addition, a skilled person in the art can make alteration and changing within the technical idea of the present invention.

Therefore, the present invention is not limited to the embodiments described above, but encompasses any and all embodiments within the scope of attached claims. For example, in present invention, other air cleaning means than air cleaner, such as filter, photocatalyst screen, negative ion generator and so on, are not limited to the combinations described above. Meanwhile, the cleaning solution is not limited to the two solutions listed above. Water can also be used as the cleaning solution to achieve the basic purification effect and so also do any solutions which kills bacteria and/or initiating oxygenolysis to remains of bacteria.

### Industrial Applicability

The present invention can be applied to air cleaning units to purify the air effectively without the secondary pollution to the indoor air.

## Claims

1. A water spray air-purifying apparatus, comprising air-in section, air-purification section with some air purifying means positioned therein, and air-out section, **characterized by**:
an air cleaner is positioned at the front end of the air purification section for carrying out the preliminary purification to the introduced air;
the air cleaner comprises one or more spray means, a dust container, a cleaning solution tank and a water pump;
the dust container having an opening at the top and a filter screen positioned at the bottom is installed below the spray means and connected to the cleaning solution tank;
the water pump is used for pumping the cleaning solution in the cleaning solution tank into the spray means for recycle.

2. The water spray air-purifying apparatus according to claim 1, wherein the air cleaner comprises further the combination unit of an ozone generator and a water pump whose outlet is connected to the cleaning solution tank below the liquid level through pipe; the cleaning solution tank is closed and fitted with a gas-water mixer; the aqueous ozone solution produced by pumping ozone into the closed cleaning solution tank is used as the cleaning solution.

3. The water spray air-purifying apparatus according to claim 1, wherein the air purifying means comprises further the negative ion generator installed near the air-flow path in the air-out section.

4. The water spray air-purifying apparatus according to claim 1, wherein one or more purifying means selected from the group consisting of photocatalyst screen, electronic catalytic sterilizer, high efficiency filter, sub-efficient filter and removable filter screen is/are installed in air-purification section.

5. The water spray air-purifying apparatus according to claim 1, wherein the spray means comprises a spout over the dust container and the spout has some orifices downward and in line(s) with a lot of orifices on a line.

6. The water spray air-purifying apparatus according to claim 5, wherein the orifices of the spray means are arranged in lines and orifices on two adjacent lines are staggered each other in the direction of line with 30-500 orifices on a line.

7. A water spray air purifying method, comprising the following steps:
the air to be purified is introduced into the air purifying apparatus through the air inlet and passes through the cleaning solution-sprayed curtain with most of harmful bacteria, dust and solid particles washed off by the sprayed cleaning solution;
the air, after the preliminary purification, is subject to the subsequent purification, followed by sent back to the room space;
meanwhile, the cleaning solution with adsorbed dust and bacteria from the air stream is filtrated, followed by flowing to the cleaning solution tank and pumped again into the spout for recycle.

8. The water spray air-purifying method according to claim 7, wherein the air purified preliminaryly is subject further to one or more of the following purification treatments:
A. exposed to the ultraviolet compound light and passing through Ni-Ti-Al based photocatalyst screen and electronic catalytic sterilizer to sterilize, decompose harmful gases and eliminate abnormal flavor;
B. adding the negative ions to refresh the air;
C. passing through the removable filter screen, high efficiency filter or sub-efficient filter for sterilization and filtration;

9. The water spray air-purifying method according to claim 7, wherein the cleaning solution is aqueous ozone solution produced by pumping the ozone from the ozone generator into the closed cleaning solution tank and mixing the gas with water and cleaning solution is used to further kill the bacteria and dust in the cleaning solution and create an oxygenolysis to the remains of the killed bacteria and dust.

10. The water spray air-purifying method according to claim 7, wherein the cleaning solution is disinfectant for washing dust off, killing bacteria and breaking down remains thereof.
